# EUROPÄISCHE PATENTANMELDUNG

(11) **EP 4 239 425 A1**
(43) Veröffentlichungstag der Anmeldung: **06.09.2023**
(21) Anmeldenummer: 22159736.2
(22) Anmeldetag: 02.03.2022
(51) Int. Cl.: G05B 19/4097

(54) **VERFAHREN ZUM BEREITSTELLEN EINER ZUMINDEST TEILWEISE COMPUTERGESTÜTZT GENERIERTEN SCHWEISSKONSTRUKTION INSBESONDERE FÜR INDUSTRIEGETRIEBE SOWIE ENTSPRECHEND HERGESTELLTE SCHWEISSKONSTRUKTION SOWIE COMPUTERPROGRAMMPRODUKT UND VERWENDUNG**

(71) Anmelder: Flender Industriegetriebe GmbH, 09322 Penig (DE)
(72) Erfinder: HAUSER, Gerd, 09322 Penig (DE); GAELINGS, Theresa, 09322 Penig (DE); SEEGERS, David, 09322 Penig (DE); KIEBEL, Jens, 09322 Penig (DE); ANGENENDT, Andreas, 09322 Penig (DE); POSER, Karen, 09322 Penig (DE); LUTZKE, Robert, 09322 Penig (DE); KUPFER, Robert, 09322 Penig (DE); NAGEL, Robert, 09322 Penig (DE); FIEDLER, Andreas, 09322 Penig (DE); HÜTTNER, Daniel, 09322 Penig (DE); GROß-HARDT, Frederik, 09322 Penig (DE); BUHL, Jörg, 09322 Penig (DE); SCHMEINK, Franz, 09322 Penig (DE); HUEBERS, Bernhard, 09322 Penig (DE)
(74) Vertreter: Michalski Hüttermann & Partner Patentanwälte mbB

(57) **Zusammenfassung**

Die vorliegende Erfindung betrifft ein Verfahren zum Bereitstellen einer zumindest teilweise computergestützt generierten Schweiß(gehäuse)konstruktion insbesondere für Industriegetriebe, wobei wenigstens ein individueller/individualisierbarer konstruktionsspezifischer Eingangsparameter wenigstens eines Teils der Schweißkonstruktion aus der folgenden Gruppe manuell und/oder computergestützt definiert wird: Baugrößenparameter, Anschlussmaßparameter, Bauformparameter; wobei zur zumindest teilweise computergestützten Definition der Schweißkonstruktion auf eine Datenbank mit darin hinterlegtem teilvariablem Baukasten zurückgegriffen wird, in welchem wenigstens zwei standardisierte Teile hinterlegt sind, von denen wenigstens ein standardisiertes Teil computergestützt ausgewählt wird zum Bilden der Schweißkonstruktion, wobei die Schweißkonstruktion unter Verwendung des wenigstens einen ausgewählten standardisierten Teiles und unter Berücksichtigung des wenigstens einen individuellen konstruktionsspezifischen Eingangsparameters computergestützt generiert wird. Des Weiteren betrifft die vorliegende Erfindung auch ein entsprechendes Computerprogrammprodukt.

## Beschreibung

### Technisches Gebiet

Die vorliegende Erfindung betrifft ein Verfahren zum Bereitstellen einer zumindest teilweise computergestützt generierten Schweißkonstruktion insbesondere für Industriegetriebe. Des Weiteren betrifft die vorliegende Erfindung eine entsprechend erstellte Schweißkonstruktion bzw. ein darauf basierend hergestelltes Schweißgehäuse. Des Weiteren betrifft die vorliegende Erfindung ein entsprechendes Computerprogrammprodukt und entsprechende Verwendungen. Insbesondere betrifft die Erfindung die zumindest teilweise computergestützte und zumindest teilweise automatisierte Erstellung von modularisierten bzw. modulartig aufgebauten Schweiß(gehäuse)konstruktionen insbesondere in Segmentbauweise. Insbesondere betrifft die Erfindung Vorrichtungen und Verfahren gemäß dem Oberbegriff des jeweiligen unabhängigen Anspruchs.

### Hintergrund der Erfindung

Im (Industrie-)Getriebebau wird viel Material verbaut, insbesondere auch Stahl, beispielsweise für Getriebegehäuse (z.B. Guss- und/oder Schweiß-Konstruktionen). Die Herstellung der zu verbauenden Materialien ist vergleichsweise energieintensiv; auch das Material als solches ist bei vielen Anwendungen recht wertvoll, also kostenintensiv. Der Materialeinsatz erweist sich bei Gusskonstruktionen in vielen Fällen als intensiver als bei Schweißkonstruktionen, so dass bei hohen Anforderungen an Material- und Energieeinsparungen bevorzugt Schweißkonstruktionen avisiert werden. Aber auch insofern besteht Interesse an weiteren Energie- und Materialeinsparungen, insbesondere ohne dabei den Aufwand für konstruktive Anpassungen oder dergleichen unverhältnismäßig steigern zu müssen. Anders ausgedrückt: Es besteht Bedarf an einer zumindest in Grundzügen standardisierbaren Maßnahme zur material- und energieoptimierten Auslegung von Getriebegehäusen und dergleichen vergleichsweise komplexen Konstruktionen.

Im Folgenden wird ein beispielhafter Anwendungsfall beschrieben: Industriegetriebe werden klassisch als Gussgehäuse für mittlere bis große Stückzahlen konzipiert; hierfür sind auch etwaige Anbauteile und sonstiges Zubehör ausgelegt. Kleine Stückzahlen oder besondere Anforderungen bedingen mitunter auch schweißtechnisch gefertigte Gehäusevarianten (insbesondere da ein Gussverfahren erst ab vergleichsweise großen Stückzahlen wirtschaftlich wird). Die Auslegung der Konstruktion erfolgt dabei für den höchsten Lastfall, da üblicherweise keine Skalierbarkeit vorgesehen ist. Der Aufbau erfolgt insbesondere aus großflächigen massiven Platten, Brennteilen und Rippen. Insbesondere auch für die Erzeugung der benötigten Konturen bei der Einzelteilherstellung ist dabei jedoch ein vergleichsweise hoher energetischer Aufwand erforderlich. Auch muss dabei bisher leider ein vergleichsweise großer Verschnittanteil in Kauf genommen werden, welcher nicht zuletzt auch eine hohe CO2-Emission begründet. Es besteht demnach Interesse an Maßnahmen zur Optimierung dieser Situation und der damit einher gehenden Nachteile.

### Beschreibung der Erfindung

Ausgehend von dieser Situation ist es eine Aufgabe der vorliegenden Erfindung, den konstruktiven Aufbau von vergleichsweise komplexen anlagentechnischen Vorrichtungen, insbesondere Getriebegehäusen, insbesondere Guss- oder Schweißkonstruktionen, in Hinblick auf minimierten Materialeinsatz vereinfachen zu können, insbesondere computergestützt optimieren zu können. Die Aufgabe besteht auch darin, bei derartigen Vorrichtungen/Konstruktionen, insbesondere bei Guss- oder Schweißgehäusekonstruktionen, auch bei individuell anwendungsspezifischen Vorgaben eine zumindest teilweise Standardisierung zu ermöglichen und auf zumindest teilweise automatisierte computergestützte Weise die Verwendung von Standard-Komponenten bei der Erstellung der Konstruktion zu empfehlen, insbesondere auch ausgehend von Gusskonstruktionen zur Erstellung einer alternativ zur Gusskonstruktion verwendbaren Schweißkonstruktion, welche zumindest teilweise und bevorzugt zu möglichst großen Anteilen auf standardisierten und material-/energieeinsatzoptimierten Teilen beruhen kann.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, kann die Lehre der jeweiligen Unteransprüche beliebig mit der Lehre der weiteren Haupt- und Unteransprüche kombiniert werden.

Insbesondere wird die Aufgabe demnach gelöst durch ein Verfahren zum Bereitstellen einer zumindest teilweise computergestützt generierten Schweißkonstruktion, insbesondere einer Schweißgehäusekonstruktion für Industriegetriebe, wobei wenigstens ein individueller/individualisierbarer konstruktionsspezifischer Eingangsparameter wenigstens eines Teils der Schweißkonstruktion aus der folgenden Gruppe manuell und/oder computergestützt definiert wird: Baugrößenparameter (Länge, Breite, Höhe, insbesondere als Außenabmessungsparameter), Anschlussmaßparameter, Bauformparameter; wobei zur zumindest teilweise computergestützten Definition der Schweißkonstruktion auf eine Datenbank mit darin hinterlegtem teilvariablem Baukasten zurückgegriffen wird, in welchem wenigstens zwei standardisierte Teile hinterlegt sind, von denen wenigstens ein standardisiertes Teil computergestützt ausgewählt wird zum Bilden der Schweißkonstruktion, wobei die Schweißkonstruktion unter Verwendung des wenigstens einen ausgewählten standardisierten Teiles und unter Berücksichtigung des wenigstens einen individuellen konstruktionsspezifischen Eingangsparameters computergestützt generiert wird. Dies ermöglicht eine beträchtliche Unterstützung des Konstruktionsprozesses und liefert auch eine hohe Effizienz bei der Verknüpfung von konstruktiven Schritten einerseits und produktions-/fertigungstechnischen Prozessen andererseits.

Insofern liefert die vorliegende Erfindung auch eine Art Konstruktionsrichtlinie oder Konstruktionsleitfaden, womit auf einfache Weise eine hinsichtlich Materialeinsatz optimierte Schweißkonstruktion generiert werden kann, insbesondere ausgehend von bisher klassischerweise genutzten Gusskonstruktionen bzw. anderen derartigen integralen massiven Konstruktionen (Überführung von klassischerweise nicht-schweißtechnisch realisierbaren Konstruktionen in hinsichtlich Materialeinsatz optimierte Schweißkonstruktionen). Der Ausgangspunkt für die Implementierung der vorliegenden Erfindung kann dabei im Einzelfall individuell gewählt werden; wahlweise wird als Ausgangspunkt eine klassische Gusskonstruktion optimiert, wahlweise wird als Ausgangspunkt eine Schweißkonstruktion gewählt, die weiter optimiert werden kann/soll. Im Folgenden wird die Erfindung insbesondere unter Bezugnahme auf (Industrie-)Getriebegehäuse konkretisiert (Guss- oder Schweißkonstruktionen).

Die für die Gesamtkonstruktion zu nutzenden Teile können beispielsweise eine von mehreren Seitenwänden der Schweißkonstruktion (z.B. Seitenwand eines Getriebegehäuses) umgrenzte Kavität bilden, in welcher ein Getriebe aufgenommen werden kann, wobei wenigstens eine Nabenleiste eine Durchführung einer Welle durch wenigstens eine der Seitenwände markiert.

Die Erfindung betrifft dabei auch ein Konstruktionskonzept, welches ermöglicht, unterschiedliche Grade/Tiefen einer Digitalisierung für den Konstruktionsprozess zu implementieren, insbesondere in Abhängigkeit des zur Verfügung gestellten bzw. eingepflegten Teilekataloges (Datenbank von verwendbaren variablen oder standardisierten Bau-/Teilen). Mit anderen Worten ist insbesondere vorgesehen, dass ein jeweiliger Konstrukteur dank teilvariablem Baukasten auf zumindest teilweise computergestützte Weise, z.B. betreffend eine einzelne Seitenwand eines Industriegetriebegehäuses, konstruktive Optionen oder Vorschläge ermitteln lassen kann. Die Erfindung betrifft demnach auch eine Vorgehensweise bzw. ein Verfahren für das Konstruieren, welche(s) es ermöglicht oder zumindest erleichtert, verschiedene nutzer-/anwendungsspezifische Anforderungen insbesondere hinsichtlich Außenabmessungen und Anschlussmaßen der zu erstellenden (Gehäuse)Konstruktion auf zumindest teilweise automatisierte Weise in eine zumindest teilweise standardisierte Schweißkonstruktion zu überführen. Dabei können unter anderem auch Messdaten eines Altgetriebes (insbesondere unter Bezugnahme auf einen Ersatzgetriebebereich) und Referenzdaten aus wenigstens einer Datenbank für vergleichbare Anwendungen berücksichtigt werden, insbesondere um die Auslegung zusätzlich auf die jeweils im Einzelfall vorrangigen Anforderung optimieren zu können (insbesondere auch zur Vermeidung von nachteilig materialintensivem Oversizing bzw. nachteiliger Überdimensionierung).

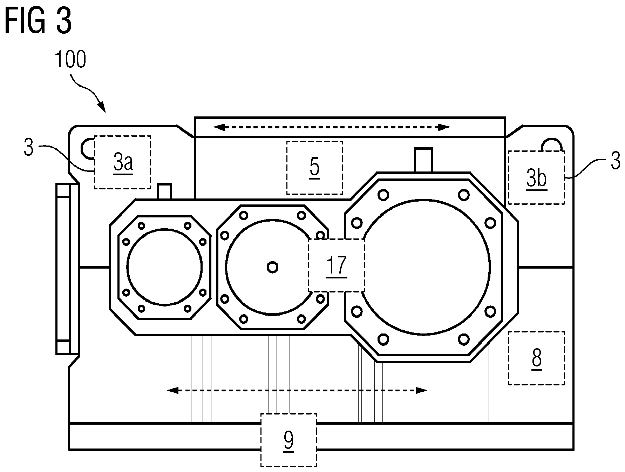

Erfindungsgemäß erfolgt dabei eine Unterteilung der Schweißkonstruktion bzw. einzelner Teile der Konstruktion in standardisierte Teile und in variable Teile, insbesondere in Segmente und Module (Untergruppierung), welche einem teilvariablen Baukastensystem zugeordnet sind (siehe auch Fig. 3). Dies erleichtert nicht zuletzt auch eine möglichst weitgehende Standardisierung hinsichtlich möglichst vieler Teile der Konstruktion.

Als Baukasten ist gemäß der vorliegenden Offenbarung insbesondere ein Datensatz mit einer Vielzahl von Konstruktionselementen bzw. Bauteilen zu verstehen, welche z.B. fertigungsprozessual bedingt verfügbar sind oder für eine bestimmte konstruktive Aufgabe zur Verfügung gestellt werden können. Als teilvariabler Baukasten ist gemäß der vorliegenden Offenbarung insbesondere ein Baukasten mit wenigstens zwei alternativ zueinander verwendbaren Teilen und/oder mit wenigstens einem bezüglich zumindest eines Parameters variablen (Bau-)Teil zu verstehen, wobei der Baukasten zusätzlich auch standardisierte Teile umfasst, so dass eine Teile-Auswahl auch in Abhängigkeit davon getroffen werden kann, ob/welche standardisierten Teile verfügbar oder verwendbar sind. Als digital integrierbarer Baukasten ist gemäß der vorliegenden Offenbarung insbesondere ein Baukasten zu verstehen, welcher durch computergestützte Berechnungsmodelle die Teileauswahl zumindest unterstützt (beispielsweise auch unter Einbezug von digitalen Werkzeugen, die auf künstlicher Intelligenz-Algorithmen beruhen) und/oder eine Verknüpfung zwischen Konstruktions- und Fertigungsprozess liefert, insbesondere indem die Fähigkeiten vordefinierbarer Fertigungslinien Berücksichtigung finden.

Dabei kann das teilvariable Baukastensystem insbesondere durch die folgenden Prozesse oder Schritte generiert oder gepflegt bzw. weiterentwickelt werden: (Getriebe-)Konfigurationsklassifikation (siehe dazu auch Schritt S2 gemäß weiter untenstehenden Ausführungen); Abfrage/Abgleich Bestands- und/oder Leistungsdatendaten (Schritt S4, S4); Zuordnung/Zuweisung von Referenzteilen und variablen Teilen (Schritt S6); Erfassung/Berücksichtigung von Messdaten wenigstens eines Bestands-/Referenzgetriebes (Schritt S10).

Jeder dieser Prozesse kann in Abstimmung mit den im Einzelfall gewünschten bzw. gewählten Fertigungsschritten individuell ausgestaltet sein, insbesondere/beispielsweise bei folgender Bezugnahme: produktionstechnische Herstellung einzelner (Standard-)Teile/Segmente (siehe dazu auch Schritt bzw. Prozess S200 gemäß weiter untenstehenden Ausführungen); schweißtechnische Produktion von variablen Modulen (Schritt bzw. Prozess S300); Verbinden/Zusammenbauen von wenigstens zwei Modulen (Schritt bzw. Prozess S400); produktionstechnische Fertigstellung des Schweißgehäuses (Schritt bzw. Prozess S500);

Im Folgenden werden zwei Beispiele für den Aufbau und die Nutzung des Baukastens gegeben, zunächst ein eher einfaches Beispiel betreffend ein Bohrbild: Bei einer standardisierten Fertigung werden im Normalfall so genannte 150%-Modelle verwendet, insbesondere um möglichst viele Anwendungen ohne Nacharbeit realisieren zu können; dies bedeutet im Umkehrschluss jedoch auch, dass bei vielen Anwendungsfällen zu viele Löcher/Bohrungen im Gehäuse vorliegen, welche dann bei der Montage erfahrungsgemäß leider auch wieder verschlossen werden müssen. Insofern ergibt sich sogar zweifacher Mehraufwand: Zunächst wird mehr Zerspannungsarbeit als notwendig durchgeführt, und im Nachgang muss händisch bei den überflüssigen Bohrungen nachgearbeitet werden (Entfernung/Verschließen). Dieser Zusatzaufwand begründende bisherige Prozedur ließ sich jedoch bisher basierend auf einer nicht-variablen Teilebibliothek mit hinterlegten klassischen Konstruktionszeichnungen kaum vermeiden, es sei denn, jedes einzelne Bauteil wurde für jeden Auftrag händisch angepasst, sogar bezüglich des Bohrbildes.

Nun ein eher komplexeres Beispiel insbesondere betreffend die Materialverfügbarkeit und damit auch den zeitlich nach Konstruktionserstellung nachgeschalteten Fertigungsprozess: Im Produktionsland sind beispielsweise bestimmte Blechstärken nicht verfügbar, was beispielsweise dazu führt, dass eine Nabenleiste nicht ohne Verwendung eines 200mm starken Blechs zum Ausbrennen hergestellt werden kann. Dieser Umstand kann (insbesondere tagesaktuell) im Rahmen des hier beschriebenen teilvariablen Baukastens insbesondere dank Laufzeitgenerierung berücksichtigt werden (Eingangs- und/oder Optimierungsparameter), insbesondere indem systemseitig auf ein anderes Segment verwiesen wird. Dieses besteht bei vorliegendem Beispiel z.B. aus weiteren Untersegmenten und kann z.B. auch ein weiteres Modul bilden; diese Untersegmente sind in diesem Beispiel im Produktionsland lieferbar bzw. material-/energieeffizient herstellbar und können auf einfachere Weise beschafft werden als das 200mm starke Blech. Während beim 200mm Blech-ein Brennprozess notwendig ist, wird beim Herstellen des computergestützt generierten Moduls aus Untersegmenten nur ein zusätzlicher Schweißprozess benötigt. Auch ein Substituieren von Werkstoffen (in definierten/vordefinierbaren Grenzen, insbesondere individualisierbar für den Baukasten oder die jeweilige Anwendung) kann eine gegebenenfalls nur zeitlich eingeschränkte Anpassung des Prozesses erfordern (Reaktion auf momentane Marktsituation oder Liefermöglichkeiten), insbesondere eines Schweißprozesses, und auch ein solcher Umstand kann im erfindungsgemäßen Baukasten abgebildet werden bzw. Berücksichtigung finden. Beispielsweise auch eine Parameterstudie im Rahmen von Optimierungsiterationen, z.B. bei in einem einzelnen Anwendungsfall reduzierter Belastung kann auf einfache Weise zu einer Konstruktion führen, welche eine deutlich leichtere Schweißausführung z.B. bei gleichbleibender Blechstärke ermöglicht. Auf diese Weise sind zahlreiche und mannigfaltige Synergieeffekte generierbar.

Erfindungsgemäß lassen sich insbesondere auch die folgenden Vorteile realisieren: Materialeinsparung durch belastungsangepasstes Design und/oder durch Verschnittreduzierung; Anpassung an individuelle Anforderungen dank teilvariablem Baukasten, insbesondere da häufig gewünschte Varianten in einen Standard überführt werden können; digitale Durchgängigkeit/Konsistenz des Entwicklung-, Konstruktions-, Produktionsvorganges; vereinfachte Langzeit-Produktpflege (insbesondere auch dank digitalem Zwilling); weitgehender oder vollständiger Verzicht auf analoge Dokumentation;

Die vorliegende Erfindung kann für unterschiedliche Arten von Schweißkonstruktionen implementiert sein/werden. Im Folgenden wird speziell auf Schweißgehäusekonstruktionen Bezug genommen, insbesondere bei vergleichsweise komplexen Industriegetrieben, wobei die entsprechende Offenbarung jedoch auch für andere Arten von Konstruktionen gelten kann; insofern wird im Folgenden mit dem Begriff "Schweißgehäusekonstruktionen" implizit auch allgemein eine erfindungsgemäß erstellte/erstellbare Schweißkonstruktion bezeichnet (oder auch nur eine Baugruppe davon, im Sinne einer Teillösung für die gesamte Konstruktion, z.B. nur eine Seitenwandbaugruppe), und vice versa, sofern im jeweiligen Kontext nicht explizit auf eine bestimmte Bedeutung abgestellt wird. Als Schweiß(gehäuse)konstruktion im engeren Sinne ist dabei die Konstruktion als solche zu verstehen (Konstruktionsdaten, Konstruktionspläne), also noch nicht das darauf basierend hergestellte/herzustellende Schweißgehäuse selbst. Der Grad/Umfang einer je nach Anwendungsfall individuellen Art und Weise einer Implementierung der vorliegenden Erfindung in Verbindung mit spezifischen Fertigungslinien/-verfahren kann dabei vom Fachmann im Einzelfall spezifisch festgelegt werden, wie im Folgenden anhand einzelner Beispiele/Bezugnahmen noch näher verdeutlicht wird.

Das erfindungsgemäße Konzept ist hier jeweils unter beispielhafter Bezugnahme auf bestimmte Arten von Schweißkonstruktionen erläutert, insbesondere hinsichtlich einer (konstruktiven) Zergliederung bzw. Segmentierung von Schweißgehäusekonstruktionen. Sofern allgemein von Schweißkonstruktionen die Rede ist, kann begrifflich beispielsweise auch wenigstens eine der folgenden Schweißkonstruktionsarten bzw. Baugruppen umfasst sein, insbesondere jeweils in Ausgestaltung als Baugruppe eines Industriegetriebes: Motorlaterne, Standardzylinder (insbesondere mit daran abgestütztem scheiben- oder ringartigen Flansch), Bremskonsole, Schwinge, Zahnrad (geschweißt, insbesondere Durchmesser im Bereich von 1 bis 5 Meter), Konus mit Flansch, Zylinder mit in Radialebene ausgerichtetem und über Rippen abgestütztem Flansch. Ein beispielhaftes Spektrum der Anwendungsmöglichkeiten ist auch in den Figuren gezeigt.

Nachfolgend werden weitere vorteilige Aspekte der beanspruchten Erfindung erläutert und weiter nachfolgend bevorzugte modifizierte Ausführungsbeispiele der Erfindung beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend verstanden werden soll, wird dies ausdrücklich erwähnt.

Gemäß einem Ausführungsbeispiel wird die Schweiß(gehäuse)konstruktion sowohl basierend auf dem wenigstens einen ausgewählten standardisierten Teil als auch basierend auf wenigstens einem von mehreren im teilvariablen Baukasten hinterlegten variablen Teil (jeweils ausgewählt aus einer Gruppe variabel alternativ verwendbarer Teile) computergestützt generiert, insbesondere unter Berücksichtigung wenigstens eines individuellen Anschlussmaßparameters und/oder wenigstens eines individuellen Baugrößenparameters. Dies erleichtert auch die effiziente Handhabung der computergestützten Konstruktionsvorlagen bei sehr variantenreichen Konstruktionen, welche zahlreiche Alternativen zulassen.

Gemäß einem Ausführungsbeispiel ist/wird die Schweißgehäusekonstruktion in vordefinierte/vordefinierbare Segmente und in Module unterteilt oder die im teilvariablen Baukasten hinterlegten standardisierten und/oder variablen Teile sind/werden in vordefinierte/vordefinierbare Segmente und Module unterteilt, wobei für die Schweißgehäusekonstruktion wenigstens ein Segment und wenigstens ein Modul ausgewählt werden, wobei das jeweilige Segment und das jeweilige Modul bevorzugt jeweils wenigstens ein Teil der Schweißgehäusekonstruktion umfassen, insbesondere jeweils mehrere miteinander verbundene/verbindbare Teile umfassen, und wobei zur computergestützten Definition/Generierung der Schweißgehäusekonstruktion auf die Datenbank mit teilvariablem Baukasten zurückgegriffen wird, in welchem die Segmente und Module hinterlegt sind/werden und aus welchem für die Schweißgehäusekonstruktion geeignete Segmente und Module computergestützt ausgewählt werden, wobei die Schweißgehäusekonstruktion aus diesem Baukasten bei zumindest teilweiser Standardisierung durch Einbezug wenigstens eines der vordefinierten standardisierten/standardisierbaren Segmente unter Berücksichtigung des wenigstens einen individuellen konstruktionsspezifischen Eingangsparameters generiert wird. Dies liefert nicht zuletzt auch bei einer Implementierung für einen ganz bestimmten Konstruktionstyp, z.B. für Industriegetriebegehäuse einer bestimmten Leistungsklasse, eine über die Zeit bzw. Nutzungsdauer wertvolle Informationsgrundlage, welche einerseits Erfahrungswerte berücksichtigen bzw. liefern kann, andererseits aber auch dank der Segmentierung bzw. Modularisierung die Variationsmöglichkeiten aufzeigt, z.B. bei leichten Änderungen von Eingangsparametern oder sich gemäß externer Bedingungen verändernder Anwendungssituationen.

Gemäß einem Ausführungsbeispiel ist der teilvariable Baukasten ein digital integrierbarer Baukasten, bei welchem die einzelnen Teile und wahlweise auch daraus gebildete Segmente und/oder Module (insbesondere als Unterbaugruppen) laufzeitgenerierbar sind. Dies ermöglicht auch auf einfache Weise einen Einbezug neuer/zusätzlicher Daten oder Parameter, insbesondere auch eine Skalierung oder Erweiterung des Spektrums von computergestützt generierbaren Konstruktionsempfehlungen, insbesondere unter Einbezug von digitalen Werkzeugen, die künstliche Intelligenz-Algorithmen nutzen oder dergleichen implementierte Selbstlernmaßnahmen umfassen.

Gemäß einem Ausführungsbeispiel ist der teilvariable Baukasten ein digital integrierbarer Baukasten, bei welchem durch wenigstens einen der folgenden manuellen oder computergestützten Schritte eine/die Datenpflege oder Datennutzung erfolgt: Input von Sollgeometriedaten; Konfigurationsklassifikation; Abfrage von Bestandsdaten und/oder Abgleich mit Leistungsdaten; Zuordnung/Zuweisung von standardisierten Referenzteilen und variablen Teilen, insbesondere in einzelne Segmente und Module; Erstellung oder Erweiterung oder Aktualisierung des teilvariablen Baukastens basierend auf einer/der Häufigkeitsverteilung benötigter Teile; Erstellung eines digitalen Zwillings der Schweißgehäusekonstruktion; Erfassung/Berücksichtigung von Messdaten wenigstens eines Bestands-/Referenzbauteils oder wenigstens einer Bestands-/Referenzkonstruktion; Anpassung eines Servicefaktors in Abhängigkeit von Leistungsdaten. Dies liefert jeweils einen vorteilhaften Schritt beim Schaffen und Nutzen einer belastbaren Daten-/Informationsgrundlage hinsichtlich wenigstens eines Typs von computergestützt generierbaren Konstruktionen.

Gemäß einem Ausführungsbeispiel sind einzelne Segmente der Konstruktion zumindest teilweise bauformunabhängig und zumindest teilweise baugrößenunabhängig zum Bilden von standardisierbaren/standardisierten Teilen der Schweißgehäusekonstruktion bereitgestellt. Diese Skalierbarkeit ermöglicht nicht zuletzt auch eine Nutzung des Baukastens für ganz unterschiedliche (Getriebe-)Leistungsklassen.

Gemäß einem Ausführungsbeispiel sind die Segmente der Konstruktion zumindest teilweise vordefiniert/vordefinierbar verwendbare (fixe) Segmente (Referenzteile bzw. Referenzteilebaugruppe) und umfassen wahlweise auch variabel/alternativ verwendbare Segmente. Gemäß einem Ausführungsbeispiel sind die Module vordefiniert verwendbare Module und/oder variabel auswählbare Module Die jeweilige Ausgestaltung der zu empfehlenden Segmentierung/Modularisierung ist stark einzelfallabhängig und anwendungsspezifisch; dabei kann vorgegeben sein/werden, ob die jeweiligen Segmente bzw. Module auch variable Teile umfassen können sollen. Eine Implementierung, bei welcher systemseitig diesbezüglich alle Varianten berücksichtigt werden können, kann die breiteste Informationsgrundlage schaffen und nutzen.

Gemäß einem Ausführungsbeispiel wird wenigstens eines der variablen Segmente aus einem Katalog von mehreren Typen dieses Segments auf automatisierte computergestützte Weise ausgewählt, insbesondere basierend auf dem wenigstens einen individuellen konstruktionsspezifischen Eingangsparameter. Die Berücksichtigung der Eingangsparameter kann dabei auch bereits im Rahmen der Teileauswahl erfolgen, und/oder auch bei einer/der Modularisierung weiterhin eine Randbedingung sein, je nach Variationsmöglichkeiten und Umfang an Alternativlösungen.

Als Segment ist gemäß der vorliegenden Offenbarung insbesondere ein Abschnitt oder Bereich der Gesamtkonstruktion zu verstehen, für welchen eine Gruppierung von Teilen oder Komponenten zu einer sinnvollen Unterteilung der Konstruktion führt. Eine Segmentierung kann dabei z.B. auch in funktionaler oder werkstoffbezogener Hinsicht erfolgen. Als Modul ist gemäß der vorliegenden Offenbarung insbesondere eine Gruppierung einzelner miteinander in einem oder mehreren Fertigungsprozessen vorteilhaft verbindbaren Teilen oder Segmenten zu verstehen, insbesondere auch eine auf einfache Weise größenskalierbare und/oder in der Anzahl skalierbare Gruppierung für eine oder mehrere Konstruktionen. Insofern kann ein Modul auch durch eine bestimmte Zusammensetzung oder Ausformung von wenigstens einem variablen Segment oder mehreren variablen und fixen Segmenten gekennzeichnet sein. Dabei kann sowohl ein Segment als auch ein Modul laufzeitgenerierte Teile umfassen. Mehrere Module bilden beispielsweise ein Getriebegehäuse.

Als vordefiniert verwendbare (fixe) Segmente, die bauformübergreifend und teilweise baugrößenübergreifend verwendet werden können, werden beispielsweise Hebeösen oder dergleichen externe Befestigungsmittel definiert. Als variable Teile, die sich laufzeitgeneriert aus einem digital integrierbaren Grundbausatz (teilvariables Baukastensystem) erstellen/zuordnen lassen, werden beispielsweise Anschlüsse für Schaulöcher oder Nabenleisten oder Wand-/Seitensegmente oder Fußleisten definiert.

Es hat sich gezeigt, dass sich die konstruktiven Merkmale, welche beim klassischen Konstruieren herangezogen werden, auch in den hier beschriebenen Segmenten oder Modulen im variablen Kontext darstellen und kombinieren lassen. Dabei können die variablen Teile kontinuierlich erweitert werden, insbesondere um neuen oder zeitlich begrenzt herrschenden Anforderungen gerecht zu werden.

Die vorliegende Erfindung ermöglicht auch, einen für den jeweiligen Anwendungsfall bzw. für die jeweilige konstruktive Aufgabe funktional stimmigen Standard zu definieren, basierend auf welchem insbesondere unter Einbezug von Nutzereingaben weitere Merkmale bzw. Features aktiviert oder deaktiviert werden können. Einzelne Segmente können dabei auf zumindest teilweise automatisierte Weise für eine jeweils getroffene Auswahl an Features geladen bzw. geometrisch variiert werden. Dies ermöglicht nicht zuletzt auch eine effiziente Handhabung einer Vielzahl von Teilen bzw. einer großen Variationsmöglichkeit (insbesondere dank großer Variierbarkeit bei gleichzeitig überschaubarer Teilemenge).

Als "laufzeitgeneriert" ist dabei insbesondere ein systemseitig bereitgestellter Vorgang zu verstehen, bei welchem eine computergestützte Auswahl unter mehreren konstruktiven Alternativen bis hin zur kompletten Erstellung der gesamten Zielkonstruktion erfolgt, insbesondere in Abhängigkeit wenigstens eines nutzerspezifisch hinterlegbaren Parameters. Anders ausgedrückt: Der Begriff "laufzeitgeneriert" beschreibt hier insbesondere das computergestützte Überführen des jeweils zu generierenden Konstruktionsobjekts (insbesondere Getriebe oder Anbauteile) ausgehend von den Eingangsparametern unter Nutzung einer/der für den jeweiligen Anwendungsfall zur Verfügung stehenden oder zu generierenden Datengrundlage (teilvariabler Baukasten) in das für die avisierte Gesamtkonstruktion nutzbare Objekt.

Im Gegensatz dazu würden die einzelnen Komponenten der avisierten Gesamtkonstruktion bei einem klassischen Konstruktionsprozess händisch zusammengesetzt, wobei nicht passende Einzelteile händisch optimiert werden müssten. Dabei ist/bleibt das für den Einzelfall konstruktiv angepasste/veränderte Bauteil erfahrungsgemäß nicht wiederverwendbar, es sei denn genau der gleich Anwendungsfalle tritt erneut wieder auf. Insofern war bisher immer wiederkehrend hoher konstruktiver Aufwand erforderlich, auch dann, wenn es nur minimale Abweichungen unter den einzelnen Anwendungsfällen gibt; denn bisher musste mit der Schwierigkeit gearbeitet werden, dass das jeweilige spezifische Einzelteil unter z.B. 5000 Versionen ähnlichen Teile wiedergefunden werden musste, was jedoch einen Such- und Vergleichsaufwand bedeutete, der höher sein konnte als eine Neukonstruktion.

Die hier beschriebene Laufzeitgenerierung kann diese Schwierigkeit umgehen bzw. überwinden, insbesondere da variable Teile stets fortlaufend computergestützt basierend auf der jeweils aktuellsten momentanen Datengrundlage des Baukastens neu erstellt werden können, so dass ein direkter aktueller Abgleich der Einzelanforderungen über die (Eingangs- und/oder Optimierungs-)Parameter mit dem Datenbestand möglich ist, insbesondere computergestützt ohne spürbaren Rechercheaufwand für den Nutzer.

Es hat sich gezeigt, dass die hier unter Bezugnahme auf beispielhafte Ausführungsformen beschriebene Segmentbauweise anhand der bisher unüblichen Kleinteiligkeit und der damit verbunden Schweißnähte auf vergleichsweise einfache Art und Weise identifiziert werden kann. Die hier beschriebenen Module können beispielsweise in Hohl-Profilkonstruktion über eine Massenabgleich detektiert werden oder über einen Resonanzvergleich (insbesondere mit Hilfe eines Modenhammers) nachgewiesen werden.

Gemäß einem Ausführungsbeispiel umfasst die Schweißgehäusekonstruktion wenigstens ein variables laufzeitgeneriertes Teil aus dem Baukasten, welches bezüglich zumindest eines der folgenden Optimierungsparameter variabel ist: Länge, Breite, Materialdicke (Materialstärke). Diese Variabilitäts-Berücksichtigung ermöglicht nicht zuletzt auch eine tiefergehende Standardisierung und Integration von Basisbauteilen.

Gemäß einem Ausführungsbeispiel wird wenigstens eines der variablen Teile bzw. Segmente bzw. Module der Schweißgehäusekonstruktion aus dem teilvariablen Baukasten laufzeitgeneriert. Dieser Schritt wird insbesondere nach erfolgter Teileauswahl vorgenommen, oder zusammen damit. Dabei kann die Segmentierung eine auch zumindest teilweise vom Nutzer vorgegebene gewünschte Segmentierung sein oder auch eine vollständig computergenerierte Segmentierungsempfehlung sein (die gegebenenfalls vom Nutzer zu bestätigen ist, bevor systemseitig eine Modularisierung erfolgt).

Die vorliegende Erfindung kann insbesondere auch im Zusammenhang mit wenigstens einer der folgenden Anwendungen implementiert sein/werden:
1. Ein Nutzer gibt anwendungsspezifische Daten ein, beispielsweise über ein Web-basiertes Frontend, wobei eine Laufzeitgenerierung vom erfindungsgemäßen Prozess angestoßen werden kann, und wobei der Nutzer ein digitales maßhaltiges Modell geliefert bekommt, und wobei der Nutzer dieses Ergebnis im Nachgang bewerten kann und gegebenenfalls eine neue oder alternative Anfrage starten kann; insofern ist eine Dateneingabe nur zu Beginn der computergestützten Konstruktionserstellung erforderlich.
2. Ein Nutzer möchte Sonderanforderungen berücksichtigen, beispielsweise solche, die noch nicht in der bereitgestellten Benutzerschnittstelle (insbesondere im Frontend) berücksichtigt sind; dann kann ein Sachbearbeiter oder Entwickler diese neuen Anforderungen in Parameter um setzt und eine Dateneingabe über die einzelnen Prozessschritte zur Laufzeitgenerierung verteilen; in diesem Zusammenhang können neue Logiken bzw. Algorithmen implementiert werden, welche dann im Nachgang der Hauptanwendung zur Verfügung stehen.

Gemäß einem Ausführungsbeispiel umfasst das Verfahren eine Parametervariation wenigstens eines Optimierungsparameters wenigstens eines variablen laufzeitgenerierten Teils der Schweißgehäusekonstruktion, insbesondere im Rahmen einer optional durch einen Nutzer parameterspezifisch zuwählbaren Optimierungsiteration der Schweißgehäusekonstruktion, insbesondere zur Materialeinsatzminimierung bei der Erstellung der Konstruktion. Dies ermöglicht nicht zuletzt auch eine gezielte Nutzerinteraktion, insbesondere auch im Sinne einer Plausibilitätsprüfung und zum Auffinden von weiteren konstruktiven Alternativen insbesondere bei neuer Gewichtung der Randbedingungen.

Eine Berücksichtigung sowohl von Eingangsparametern als auch von Optimierungsparametern ermöglicht auch, die jeweils im Einzelfall benötigten Anschlussmaße und Leistungsdaten gezielter für den Nutzer zu berücksichtigen, wobei die Optimierungsparameter systemseitig anwendungsspezifisch für den Nutzer bzw. für die zu erstellende Konstruktion ausgewählt oder zumindest vorgeschlagen werden können; dies führt z.B. auch zu einer Konstruktion, welche nicht auf einer oftmals überdimensionierten Standardgröße basiert, sondern als eine anwendungsspezifisch optimierte Sondergröße erachtet werden kann.

Gemäß einem Ausführungsbeispiel wird wenigstens eines der Module (bzw. die entsprechende Unterbaugruppe von Teilen) auf automatisierte computergestützte Weise erstellt und/oder zugeordnet. Dabei kann insbesondere auch auf einzelne laufzeitgenerierte Teile oder Segmente Bezug genommen werden.

Gemäß einem Ausführungsbeispiel bildet (bzw. stellt dar) wenigstens eines der Module eine Unterbaugruppe von Teilen für eine Nabenleiste der Schweißgehäusekonstruktion. Dieses spezifische Beispiel zeigt das Einsparpotential insbesondere auch für einzelne Baugruppen auf.

Gemäß einem Ausführungsbeispiel bilden die Module jeweils eine Unterbaugruppe, insbesondere eine laufzeitgeneriert erstellbare/zuordenbare Unterbaugruppe. Diese Art der Modularisierung ermöglicht nicht zuletzt auch eine synergetische Kopplung mit einzelnen gegebenenfalls separat zu betrachtenden Fertigungsschritten (insbesondere dann, wenn für die einzelnen Fertigungsprozesse unterschiedliche Fertigungslinien und/oder unterschiedliche externe Dienstleister herangezogen werden sollen/müssen.

Gemäß einem Ausführungsbeispiel sind/werden einzelne Segmente und Module der Schweißgehäusekonstruktion in vordefinierter Wechselbeziehung/Korrelation zueinander im Baukasten hinterlegt, insbesondere derart, dass die Verwendung eines bestimmten Segments die Verwendung/Empfehlung wenigstens eines bestimmten Moduls bedingt, und/oder umgekehrt. Auch dies kann weitere Synergieeffekte begünstigen und eine weitreichendere Standardisierung auch bei erfahrungsgemäß großen konstruktiven Variationen oder Abweichungen erleichtern.

Gemäß einem Ausführungsbeispiel wird der wenigstens eine individualisierbare konstruktionsspezifische Eingangsparameter wenigstens eines Teils der Schweißgehäusekonstruktion manuell über eine grafische Benutzerschnittstelle eingegeben oder während der computergestützten Erstellung der Schweißgehäusekonstruktion zur manuellen Eingabe oder Variation systemseitig abgefragt. Dies ermöglicht nicht zuletzt auch eine in Einzelfällen möglicherweise gewünschte Nutzerinteraktion oder Einflussnahme insbesondere zu vordefinierten/vordefinierbaren Entscheidungen oder Parameter während des Konstruktionsprozesses.

Gemäß einem Ausführungsbeispiel umfasst das Verfahren wenigstens einen der folgenden Schritte, insbesondere unter Berücksichtigung der folgenden Chronologie: Input von Sollgeometriedaten; (Getriebe-)Konfigurationsklassifikation; Auslegung von Getriebeübersetzung und/oder Radsatz; Abfrage von Bestandsdaten; Analyse von und/oder Abgleich mit Leistungsdaten, insbesondere Anpassung eines Servicefaktors; Erstellung der Schweißgehäusegeometrie basierend auf einer Zuordnung/Zuweisung von Referenzteilen (vordefinierte unveränderliche Teile) und variablen Teilen (insbesondere alternativen bzw. gegeneinander austauschbaren Teilen); Erstellung oder Erweiterung oder Aktualisierung eines/des teilvariablen digital integrierbaren Baukastens insbesondere basierend auf einer/der Häufigkeitsverteilung tatsächlich benötigter Teile; Erstellung eines digitalen Zwillings der Schweißgehäusekonstruktion; Erstellung/Bereitstellung von Fertigungsunterlagen; und/oder wobei das Verfahren basierend auf Messdaten wenigstens eines Bestands-/Referenzgetriebes ausgeführt wird, insbesondere indem ein Abgleich mit tatsächlichen Leistungsdaten erfolgt, insbesondere im Rahmen einer computergestützten Iteration. Diese Schritte liefern jeweils auch Vorteile hinsichtlich der Erstellung und Nutzung einer belastbaren Daten-/Informationsgrundlage.

Gemäß einem Ausführungsbeispiel wird ein digitaler Zwilling der Schweißgehäusekonstruktion erstellt und in der Datenbank abgelegt. Dies erweitert nicht zuletzt auch den Raum der Möglichkeiten der Daten- oder Informations- oder Ergebnisnutzung, insbesondere auch im Nachgang eines Konstruktions-Prozesses z.B. im Zusammenhang mit der Fertigung oder der Wartung/Instandsetzung.

Die zuvor weiter oben definierte Aufgabe wird auch gelöst durch ein Verfahren zum Fertigen eines Schweißgehäuses, wobei wenigstens eine Fertigungsanlage/-maschine mittels Konstruktionsdaten gespeist wird, welche mittels eines/des zuvor weiter oben beschriebenen Verfahrens generiert und bereitgestellt sind/werden, wobei die Fertigungsanlage/-maschine bevorzugt an eine/die Datenbank gekoppelt ist (insbesondere über wenigstens eine Datentransferschnittstelle), in welcher ein/der für das Generieren der entsprechenden Schweißgehäusekonstruktion genutzte teilvariable Baukasten hinterlegt ist. Dies liefert zuvor weiter oben genannte Vorteile. Dabei erfolgt bevorzugt bezüglich wenigstens eines der folgenden Schritte ein Einbezug der aus dem teilvariablen Baukasten generierten Konstruktionsdaten: produktionstechnische Herstellung einzelner (Standard-)Teile/Segmente; schweißtechnische Produktion von variablen Modulen; Verbinden/Zusammenbauen von wenigstens zwei Modulen; produktionstechnische Fertigstellung der Schweißkonstruktion.

Die zuvor weiter oben definierte Aufgabe wird auch gelöst durch eine Schweißgehäusekonstruktion, hergestellt durch Anwendung eines/des zuvor weiter oben beschriebenen Verfahrens, wobei die Schweißgehäusekonstruktion bevorzugt ein modularisiertes bzw. modulartig aufgebautes Schweißgehäuse in Segmentbauweise betrifft/abbildet, bevorzugt umfassend zumindest ein aus mehreren Teilen gebildetes Segment und zumindest ein daraus generiertes Modul. Dies liefert zuvor weiter oben genannte Vorteile.

Die zuvor weiter oben definierte Aufgabe wird auch gelöst durch ein Schweißgehäuse, hergestellt durch Verbauen von einerseits standardisierten und andererseits variablen (Bau-)Teilen, welche durch Anwendung eines/des zuvor weiter oben beschriebenen Verfahrens zumindest teilweise computergestützt ausgewählt und zumindest teilweise computergestützt zusammen zu einer/der Schweißgehäusekonstruktion konstruiert bzw. virtuell verbaut sind/werden, wobei das Schweißgehäuse bevorzugt ein modularisiertes Schweißgehäuse in Segmentbauweise ist, bevorzugt umfassend zumindest ein aus mehreren Teilen gebildetes Segment und zumindest ein daraus generiertes Modul. Dies liefert zuvor weiter oben genannte Vorteile insbesondere auch unmittelbar im fertigungstechnischen Zusammenhang.

Die zuvor weiter oben definierte Aufgabe wird auch gelöst durch ein Computerprogrammprodukt umfassend Befehle, die bei Ausführung des Computerprogrammproduktes auf einem Computer diesen dazu veranlassen, ein/das zuvor weiter oben beschriebenes Verfahren auf dem Computer auszuführen, insbesondere Computerprogrammprodukt eingerichtet zum Überführen von computergestützt aus einem/dem teilvariablen Baukasten ausgewählten/auszuwählenden vordefinierten und variablen (Bau-)Teilen in eine zumindest teilweise standardisierte Schweißkonstruktion basierend auf wenigstens einer nutzer-/anwendungsspezifische Anforderung oder eines entsprechenden Eingangsparameters insbesondere hinsichtlich Außenabmessungen und Anschlussmaßen der zu erstellenden Konstruktion. Dies liefert zuvor weiter oben genannte Vorteile.

Die zuvor weiter oben definierte Aufgabe wird auch gelöst durch Verwendung eines in einer Datenbank hinterlegten teilvariablen Baukastens, in welchem standardisierte und variable Teile hinterlegt sind, zum Bereitstellen einer zumindest teilweise computergestützt generierten Schweißgehäusekonstruktion insbesondere für Industriegetriebe, zum computergestützten Auswählen wenigstens eines der standardisierten Teile und/oder wenigstens eines der variablen Teile unter Berücksichtigung wenigstens eines individuellen/individualisierbaren konstruktionsspezifischen Eingangsparameters und zum computergestützten Erstellen der Schweißkonstruktion, insbesondere indem vordefinierte und variable (Bau-)Teile aus dem teilvariablen Baukasten basierend auf wenigstens einer nutzer-/anwendungsspezifische Anforderung oder eines entsprechenden Eingangsparameters insbesondere hinsichtlich Außenabmessungen und Anschlussmaßen der zu erstellenden Konstruktion computergestützt ausgewählt und in eine zumindest teilweise standardisierte Schweißkonstruktion computergestützt übergeführt werden, insbesondere bei einem zuvor weiter oben beschriebenen Verfahren. Dies liefert zuvor weiter oben genannte Vorteile.

Die zuvor weiter oben definierte Aufgabe wird auch gelöst durch ein System eingerichtet zum Ausführen eines zuvor weiter oben beschriebenen Verfahrens, insbesondere mit dem System aufweisend: wenigstens einen Server, wenigstens eine Datenbank mit darin hinterlegten fixen und variablen Teilen, einen/den teilvariablen Baukasten, eine Eingabemaske oder Benutzerschnittstelle zum Hinterlegen des wenigstens einen Eingangsparameters (insbesondere Geometrie-Daten, Bestandsdaten, Leistungsdaten).

### Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt. Es zeigen
- Fig. 1A, 1B: jeweils in schematischer Darstellung eine perspektivische Seitenansicht eines basierend auf einer konstruktions-/fertigungstechnischen Vorgehensweise gemäß dem Stand der Technik erstellten Bauteils (Nabenleiste);
- Fig. 2: in schematischer Darstellung eine perspektivische Ansicht einer basierend auf einer konstruktions-/fertigungstechnischen Vorgehensweise gemäß dem Stand der Technik erstellten Baugruppe (Nabenleiste mit partieller Aufdickung sowie Gehäuseseitenwandkomponenten);
- Fig. 3: in schematischer Darstellung eine Seitenansicht einer Gehäuseseitenwand konzipiert/konstruiert basierend auf einer konstruktions-/fertigungstechnischen Vorgehensweise gemäß Ausführungsbeispielen der Erfindung, insbesondere unter Bezugnahme auf vordefinierte/vordefinierbare Segmente und Module;
- Fig. 4: in schematischer Darstellung eine Bezugnahme der erfindungsgemäßen konstruktions-/fertigungstechnischen Vorgehensweise auf einzelne Fertigungsschritte und damit erstellte Module;
- Fig. 5A, 5B: jeweils in schematischer Darstellung eine perspektivische Schnitt- bzw. Seitenansicht eines basierend auf einer erfindungsgemäßen konstruktions-/fertigungstechnischen Vorgehensweise erstellten Bauteils (Nabenleiste);
- Fig. 6: in schematischer Darstellung einzelne Schritte eines Verfahrens gemäß Ausführungsbeispielen der Erfindung, insbesondere bei einer Implementierung im Zusammenhang mit wenigstens einem Fertigungsprozess;

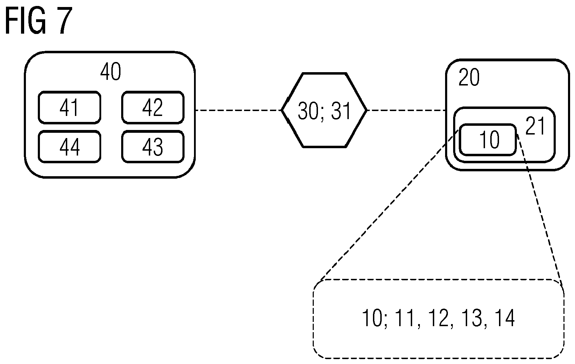

- Fig. 7: in schematischer Darstellung einzelne interagierende Komponenten bei der Ausführung der vorliegenden Erfindung gemäß Ausführungsbeispielen;
- Fig. 8A, 8B, 8C, 8D, 8E, 8F: jeweils in schematischer Darstellung eine perspektivische Seitenansicht eines Schweißbauteils bzw. einer Schweißkonstruktion, welche/s mittels einer erfindungsgemäßen konstruktions-/fertigungstechnischen Vorgehensweise erstellbar ist;
- Fig. 9A, 9B, 9C, 9D, 9E, 9F, 9G, 9H: jeweils paarweise in schematischer Darstellung und perspektivischer Ansicht vier Beispiele von computergestützten Optimierungsansätzen basierend auf einer Implementierung der vorliegenden Erfindung;

### Detaillierte Beschreibung der Ausführungsbespiele

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden. Die Bezugszeichen werden zunächst allgemein beschrieben; eine individuelle Bezugnahme erfolgt im Zusammenhang mit der jeweiligen Figurenbeschreibung. Dabei wird die Bezugsziffer 100 synonym sowohl für eine Schweiß(gehäuse)konstruktion (bzw. die entsprechenden Konstruktionsdaten und deren computergestütztes Abbild) als auch für ein/das darauf basierend herstellbare Schweißgehäuse oder dergleichen komplexe final montierte/verschweißte Bauteilgruppe verwendet.

Ein Schweißgehäuse 1, insbesondere für Industriegetriebe weist z.B. einzelne Seitenwände 1.1 auf, die durch Seitenwandbaugruppen 1.3 bereitgestellt werden können, wobei diese z.B. die folgenden Teile umfassen können: Hebeösen 3, insbesondere erste Hebeöse 3a (links) und zweite Hebeöse 3b (rechts bzw. gegenüberliegend); Anschluss 5 insbesondere für ein Schauloch; Nabenleiste 7 (gemäß herkömmlicher Bauweise); weiteres Seitenwandbauteil 8 insbesondere im unteren Randbereich der Seitenwandbaugruppe 1.3; Fuß-/Bodenleiste 9;
Bei einer klassischen Herangehensweise zur Konstruktion/Fertigung der Nabenleiste 7 entsteht ein vergleichsweise hoher Verschnitt(anteil) 7a. Mittels des im Folgenden näher beschriebenen teilvariablen Baukastens 10 kann die konstruktive Herangehensweise und die damit einhergehende computergestützt generierte Lösung (Konstruktionsvorschlag) zu einer spürbaren Reduktion von Material- und/oder Energieaufwand führen.

Dem teilvariablen Baukasten 10 liegen einerseits fix vordefinierte Teile 11 (nicht variabel) und andererseits auch variable/variationsfähige Teile 12 zugrunde; im Rahmen der vorliegenden Erfindung können daraus computergestützt Segmente 13 und Module 14 generiert werden, insbesondere in Ausgestaltung als konstruktionsspezifische Unterbaugruppen. Diese computergestützte Ermittlung der im jeweiligen Einzelfall sinnvollen individuellen, aber möglichst doch zumindest teilweise auf standardisierten material-/energieoptimierten Teilen beruhenden Konstruktion wird hier insbesondere unter Bezugnahme auf eine/die Nabenleiste 17 (insbesondere mit/aus variablen Teilen) beschrieben, bei welcher dank der erfindungsgemäßen Herangehensweise ein Verschnitt(anteil) 17a spürbar minimiert ist.

Das erfindungsgemäße Verfahren kann dabei unter Berücksichtigung wenigstens eines Eingangsparameters P und unter Nutzung wenigstens eines Servers 20 und wenigstens eines Datenspeichers 21 (bzw. Datenbank) und unter Einbezug eines Computerprogramms (bzw. - produkts) 30 implementiert sein, wobei eine Nutzerinteraktion zu verschiedenen Stadien der Konstruktionserstellung über eine grafische Benutzerschnittstelle 31 ermöglicht wird. Die Implementierung kann dabei wahlweise unter Einbezug einer Fertigungslinie 40 (bzw. der damit realisierbaren Fertigungsprozesse) mit beispielsweise einer erste, zweiten, dritten und vierten Fertigungsanlage/-maschine 41, 42, 43, 44 erfolgen. Auf diese Weise kann unter Verwendung eines großen Anteils standardisierter Komponenten (oder fallweise auch ausschließlich) gleichwohl zu individualisierten Schweißgehäusekonstruktionen 100, insbesondere Getriebegehäusekonstruktionen gelangt werden. Die generierten und genutzten Daten(sätze) können dabei auch unmittelbar oder zeitlich im Nachgang für nachgehende (Fertigungs-)Prozesse oder für eine Betreuung der jeweiligen Anlage während der gesamten Lebensdauer bereitgestellt werden.

Die vorliegende Erfindung kann insbesondere im Zusammenhang mit den folgenden Schritten implementiert sein/werden: S1 Input von Sollgeometriedaten; S2 (Getriebe-)Konfigurationsklassifikation; S3 Auslegung von Getriebeübersetzung und/oder Radsatz; S4 Abfrage von Bestandsdaten; S5 Abgleich mit Leistungsdaten; S6 Erstellung der Schweißgehäusegeometrie basierend auf einer Zuordnung/Zuweisung von Referenzteilen und variablen Teilen; S7 Erstellung oder Erweiterung oder Aktualisierung eines/des teilvariablen digital integrierbaren Baukastens insbesondere basierend auf einer/der Häufigkeitsverteilung tatsächlich benötigter Teile; S8 Erstellung eines digitalen Zwillings der Schweißgehäusekonstruktion; S9 Erstellung/Bereitstellung von Fertigungsunterlagen; S10 Erfassung/Berücksichtigung von Messdaten wenigstens eines Bestands-/Referenzgetriebes (insbesondere umfassend Schritt S10a); S10a Analyse/Abgleich mit tatsächlichen Leistungsdaten, insbesondere Anpassung eines Servicefaktors;

Dabei kann eine zumindest teilweise automatisierte Überführung S100 von einzelnen ausgewählten Bauteilen/-gruppen in eine zumindest teilweise computergestützt generierte Schweißgehäusekonstruktion 100 erfolgen. Dabei kann wahlweise auch eine Kopplung mit wenigstens einem der folgenden fertigungstechnischen Prozesse erfolgen: S200 produktionstechnische Herstellung einzelner (Standard-)Teile/Segmente; S300 schweißtechnische Produktion von variablen Modulen; S400 Verbinden bzw. Zusammenbauen von wenigstens zwei Modulen; S500 produktionstechnische Fertigstellung des Schweißgehäuses;

Im Folgenden wird jeweils auf einzelne Aspekte der in den Figuren gezeigten Ausführungsbeispiele eingegangen.

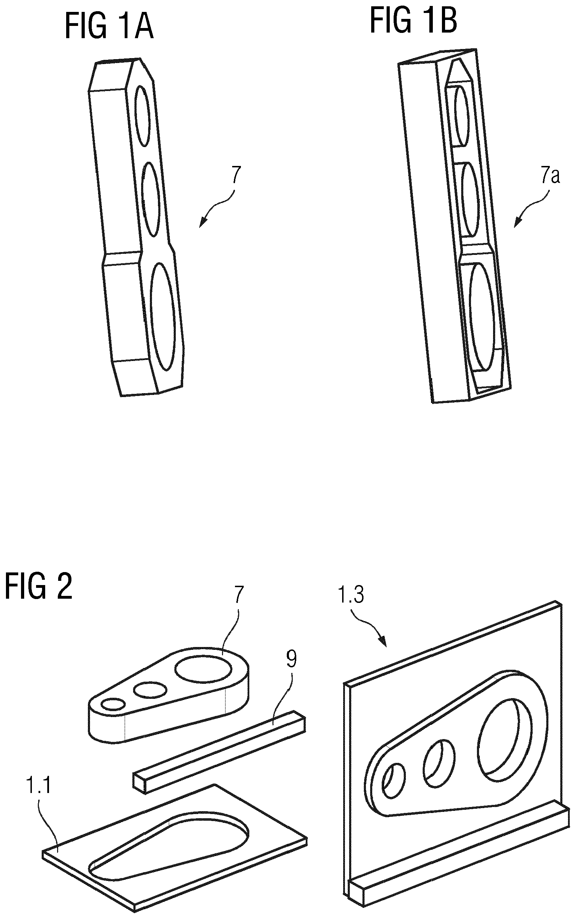

Die **Figuren 1A**, **1B** veranschaulichen ein Beispiel für bisherigen (nachteiligen bzw. unwirtschaftlichen und/oder energetisch/emissionstechnisch optimierbaren) Materialeinsatz insbesondere unter Bezugnahme auf eine Nabenleiste (Aufnahme für Lagersysteme). Üblicherweise muss der Nabenleistenausschnitt aus der Seitenwand erfolgen, insbesondere im Monoblockbereich. Hierbei handelt es sich beispielsweise um ein 10-40mm starkes Blech. Mit dieser konstruktions-/fertigungstechnischen Vorgehensweise geht demnach erheblicher Verschnitt einher. Figur 1A zeigt die Nabenleiste. Figur 1B zeigt den Verschnittanteil.

**Figur 2** veranschaulicht bisherige Ansätze zur Optimierung einer Konstruktion, wobei dafür auf die Komponenten einer Seitenwand eines (Getriebe-)Gehäuses Bezug genommen wird, jedoch wurden diese Ansätze bisher auch für viele andere Anwendungen/Konstruktionen weiterverfolgt. Zeitweise geringe Stahlpreise und bereits vergleichsweise effiziente Verarbeitungsverfahren boten dabei bisher möglichweise wohl nur wenig Anlass, großen Aufwand in verschnittoptimierte Konstruktionen zu stecken. Insbesondere erfolgte bisher eine partielle Aufdickung bzw. Materialverstärkung im jeweils erforderlichen Abschnitt der Konstruktion, hier beispielhaft bei einer/der Nabenleiste, insbesondere um die Mindestplattendicke reduzieren zu können. So wird z.B. auch an einer Abtriebswelle (insbesondere Langsamläufer) ein weiteres Stück Blech aufgeschweißt, um die gesamt Dicke der restlichen Nabenleiste spürbar reduzieren zu können. Abgesehen davon erfolgt die Auslegung der Konstruktion insbesondere entsprechend der Vorgabe, möglichst wenige Einzelteile realisieren zu müssen, insbesondere um den manuellen Aufwand möglichst gering halten zu können. Fig. 2 veranschaulicht eine auf dieser bisherigen Herangehensweise basierende Schnittkontur für eine Seitenwand eines (Getriebe-)Gehäuses, wobei diese insbesondere zweifach an gegenüberliegenden Gehäuseseiten realisierbare Seitenwandbaugruppe 1.3 aus drei Komponenten gebildet ist/wird: Seitenwand 1.1, Nabenleiste 7, Fuß-/Bodenleiste 9.

Diese Herangehensweise führt jedoch in vielen Anwendungsfällen zu nachteilig hohem Verschnittanteil und damit auch zu einem deutlich höheren Energieverbrauch bzw. CO2-Verbrauch.

Die Erfindung ermöglicht beispielsweise auch, verschiedene nutzerspezifische Anforderungen hinsichtlich Außenabmessungen und Anschlussmaßen auf zumindest teilweise automatisierte Weise in eine Schweißkonstruktion zu überführen, insbesondere auf zumindest teilweise computergestützte Weise unter Einbezug eines teilvariablen Baukastens, der zum einen auf zumindest teilweise computergestützte Weise gepflegt werden kann (Datenpflege, Aktualisierung, Einbezug neuer Randbedingungen), und der zum andere auch auf zumindest teilweise computergestützte Weise für das Erstellen der Konstruktion oder einzelner Komponenten der finalen Gesamtkonstruktion herangezogen werden kann, wobei wahlweise auch eine Implementierung direkt im Zusammenhang mit einzelnen Fertigungslinien/-schritten erfolgen kann, insbesondere um Besonderheiten einzelner Fertigungslinien oder Werkstoffe oder Verarbeitungs-/Materialbearbeitungsschritte berücksichtigen zu können (z.E. Eigenarten beim Schweißen bestimmter Materialien oder Materialkombinationen/-paarungen). Dabei erfolgt bevorzugt auch eine Unterteilung der zu erstellenden (Schweiß-)Konstruktion in Segmente und Module, welche einem teilvariablen Baukastensystem zugeordnet bzw. entnehmbar sind (Figur 3).

Unter Bezugnahme auf Fig. 3 wird ein Aspekt der erfindungsgemäßen Erstellung der ZielKonstruktion erläutert, welcher eine Vereinheitlichung bei weiterhin möglichst flexiblem Variantenreichtum ermöglicht, wieder unter Bezugnahme auf eine Gehäuseseitenwandbaugruppe. Hierbei bilden die Teile 3 (bzw. Teile 3a, 3b auf gegenüberliegenden Seiten der in der Fig. 3 gezeigten Baugruppe) fixe Segmente (bzw. werden im Rahmen der vorliegenden Erfindung als solche definiert), wobei diese Segmente bauformübergreifend und zumindest teilweise baugrößenübergreifend verwendet werden können. Demgegenüber bilden die Teile 5 (Anschluss Schaulochdurchmesser), 8 (Wandbauteil/- baugruppe), 9 (Fuß-/Bodenleiste bzw. Bodenbaugruppe), 17 (Nabenleiste) jeweils variable Teile(gruppen), die sich aus dem hier beschriebenen Baukasten (insbesondere in Ausgestaltung als digital integrierbarer Norm-Grundbausatz) generieren lassen, insbesondere zumindest teilweise computergestützt. Anders ausgedrückt: Die Konstruktion wird nicht mehr (nur) basierend auf den bisher herangezogenen Einzelteilen erstellt, sondern kann nun auch durch Kombination vorteilhafter Segmente und Module insbesondere hinsichtlich Material- und Energieeinsatz optimiert werden; dies lässt einerseits eine große Variabilität, andererseits auch eine Standardisierung und dadurch auch Skalen-/Syneregieeffekte realisierbar werden, insbesondere bei direkter Kopplung mit dem jeweils relevanten oder gemäß technologischer Ausstattung eines jeweiligen Unternehmens realisierbaren Fertigungsprozess (Maschinenpart Fertigungslinien, Eingen-/Fremdfertigung oder dergleichen Aspekte). Dabei veranschaulicht der jeweilige gepunktete Doppelpfeil beispielhaft eine räumliche oder funktionale Erstreckung eines einzelnen Segments.

Dabei können laufzeitgenerierte Teile sowohl in Länge und Breite als auch in der Materialdicke variiert werden. Abhängig von den spezifisch vorgebbaren Eingangsparametern kann ein/der im Rahmen der vorliegenden Erfindung implementierbare Algorithmus auch über das zu verwendende variable Segment entscheiden (computergestützte Auswahl basierend auf anwendungsspezifisch definierbarer Randbedingungen). Beispielsweise kann Teil 5 (Wandbauteil/-baugruppe), sowohl eine glatte Seitenwand darstellen als auch eine Variante mit unregelmäßigen belastungsangepassten Auswölbungen (insbesondere in der Art eines Spundwanddesigns) sein oder auch andere funktionale/konstruktive Merkmale integrieren/aufweisen. Eine/die hier beispielhaft beschriebene erfindungsgemäße Aufteilung der variablen und fixen Segmente ermöglicht speziell unter Bezugnahme auf die hier beschriebene Gehäuseseitenwand eine deutliche Reduzierung des Verschnitts insbesondere für die Nabenleiste, und demnach auch eine merkliche Reduktion des CO2-Äquivalents der dafür erforderlichen Fertigung (vergleichbare Vorteile in energetischer Hinsicht insbesondere bei metallischen Werkstoffen).

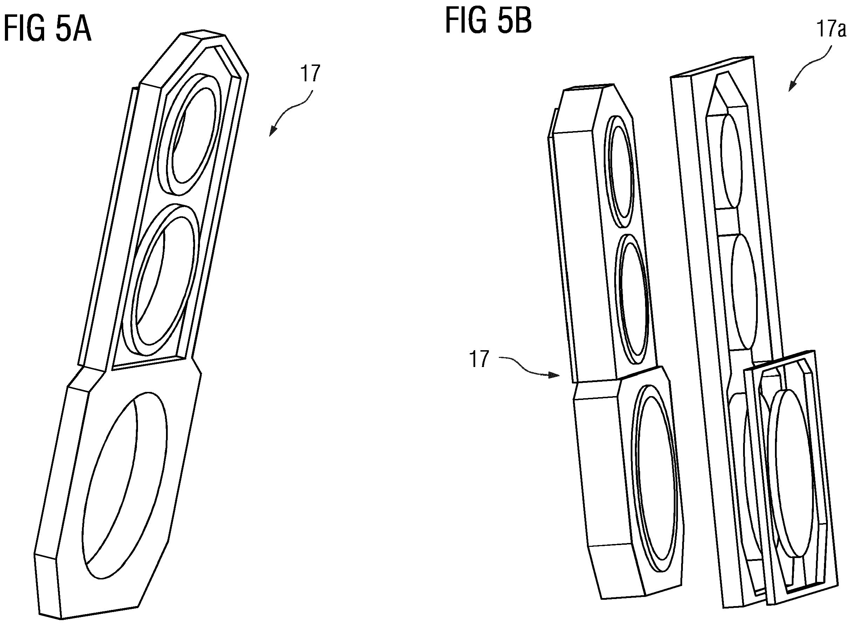

Bei den hier beschriebenen Modulen kann es sich um Unterbaugruppen handeln, die ebenfalls laufzeitgeneriert vom implementierbaren Algorithmus erstellt und/oder zugeordnet werden können. Als Beispiel sei hier nochmals die Nabenleiste aufgeführt. Diese kann bei kleinen Baugrößen insbesondere als variables Segment oder aus Fixteilen bestehend dem Baukasten zugeordnet werden, oder bei größeren Baugrößen insbesondere aus eigenen variablen und fixen Segmenten bestehen (vergleiche dazu die **Fig. 2****,** **Fig. 5A****, 5B).** Dabei können unterschiedliche konstruktive Anforderungen und Detaillierungsgrade und Konstruktionsphasen computergestützt berücksichtigt werden. Beispielsweise wird das Konzept der Hohl-Profilkonstruktion angewendet bzw. computergestützt bei der Auswahl und Definition der einzelnen Teile/Segmente/Module berücksichtigt, insbesondere um ähnliche mechanische Eigenschaften wie bei einem massiven Teil zu erreichen (gegebenenfalls Eingangsparameter betreffend die Steifigkeit oder dergleichen Materialparameter).

Beim hier betrachteten Beispiel kann der Verschnitt erfindungsgemäß auf die beiden Außenplatten reduziert werden, während die Zwischenstücke von Halbzeugen abgelängt werden können. Die Aufnahme der Wellenlager kann dabei beispielsweise durch Rohrhalbzeuge ermöglicht werden. Der Konstrukteur kann die zumindest teilweise computergestützt generierten Konstruktionskomponenten dabei auch phasenweise gegenprüfen und gegebenenfalls die Generierung von weiteren Alternativen initiieren, beispielsweise unter anderer Gewichtung einzelner Eingangsparameter.

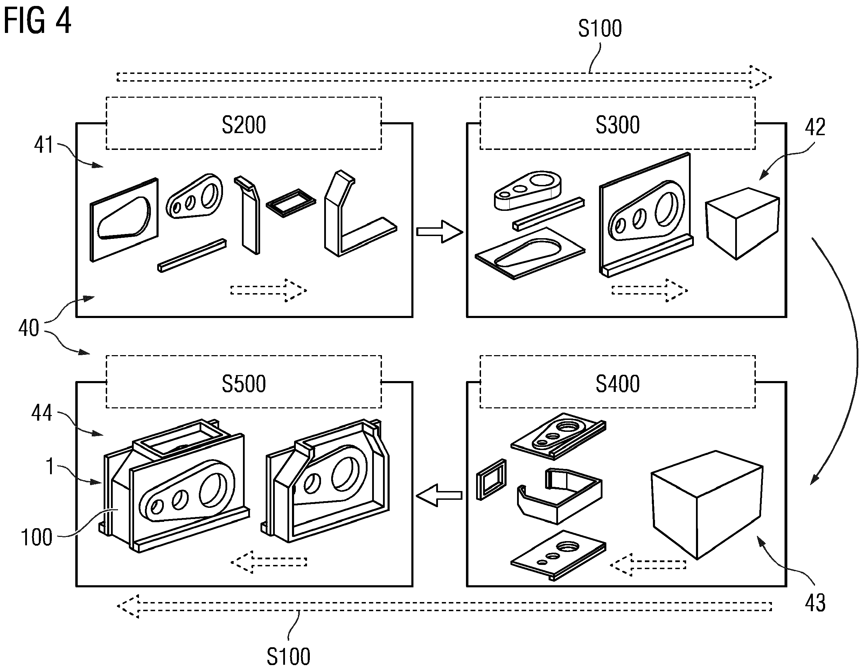

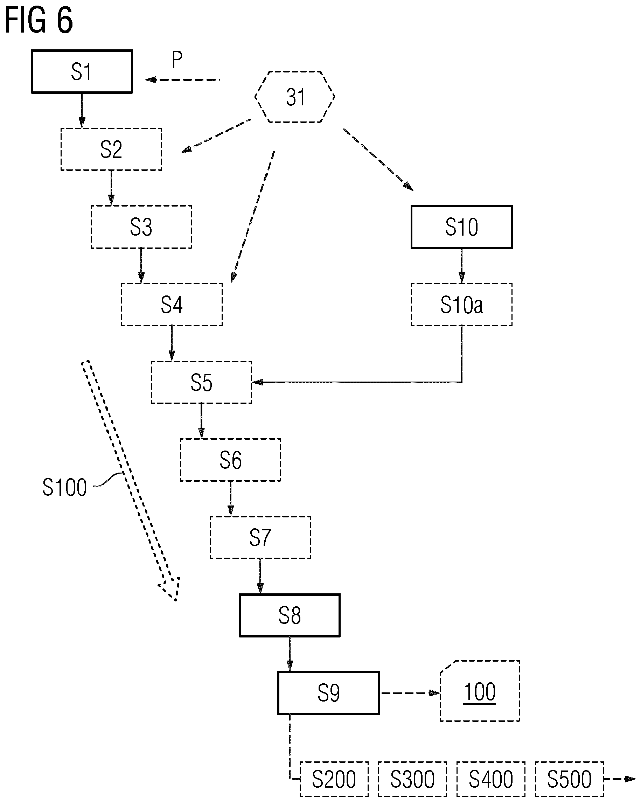

In **Fig. 4** wird eine Interaktion der erfindungsgemäßen zumindest teilweise automatisierten Überführung (Schritt S100) von Randbedingungen und Einzelteilen in eine computergestützt generierte (bevorzugt modularisierte, segmentierte) Schweißgehäusekonstruktion mit tatsächlichen Fertigungsschritten erläutert: Schritt S200 betrifft die produktionstechnische Herstellung einzelner (Standard-)Teile/Segmente, insbesondere hier beispielhaft das Plasmaschneiden und autogene Schweißen durch eine Fertigungseinheit/-linie (machining process unit); Schritt S300 betrifft eine schweißtechnische Produktion von variablen Modulen, beispielsweise unter Einbezug von so genannter Instant Robot Programming System (IRPS) Technologie, z.B. in einer einzelnen Schweißmaschine (compact welding unit); Schritt S400 betrifft das Verbinden/Zusammenbauen von wenigstens zwei Modulen, z.B. durch eine Portalschweißanlage, insbesondere unter Einbezug von Offline Programming; Schritt S500 betrifft eine/die finale produktionstechnische Fertigstellung des Schweißgehäuses, insbesondere indem die Umrisskonturen des Gehäuses bzw. der einzelnen Module miteinander verschweißt werden, sei es manuell, sei es zumindest teilweise unterstützt durch einen Schweißroboter. Die hier beschriebene zumindest teilweise automatisierte Überführung (Schritt S100) kann die einzelnen Fertigungsschritte begleiten bzw. diesbezügliche Eingangsparameter oder Randbedingungen berücksichtigen. Dabei ist eine/die jeweilige verwendbare Fertigungsmaschine (oder ein entsprechender Abschnitt einer Fertigungslinie) jeweils durch einen Blockpfeil mit Punktlinie veranschaulicht (gepunktete Umrisskontur). Die für das computergestützte Erstellen der Konstruktion herangezogenen Schritte hingegen werden durch Strichlinien (gestrichelte Linien) veranschaulicht (dieselbe Differenzierung erfolgt auch gemäß der Illustration in Fig. 6), wobei diese Schritte begleitend zur Fertigung oder zeitlich komplett unabhängig vorgenommen werden können, was durch den gestrichelten Blockpfeil S100 veranschaulicht ist.

Die **Figuren 5** zeigen unterschiedliche Ausgestaltungen der Nabenleiste 17. In **Fig. 5A** ist insbesondere im Vergleich zu den Fig. 1 eine Nabenleiste gezeigt, für deren Produktion auf vergleichsweise dünne Halbzeuge zurückgegriffen wurde (möglichst starke Reduzierung des Verschnitts), sei es aus Gründen der Materialeinsparung, sei es weil ausreichend dickes/starkes Material (insbesondere Blech) nicht zur Verfügung stand/steht. Die dargestellte Nabenleiste ist aus einzelnen Segmenten aufgebaut. Hierbei werden nicht oder weniger stark belastete Bereiche zumindest teilweise durch Hohlräume ersetzt, was Gewicht und Verschnitt einsparen kann. Dabei zeigt Fig. 5A einen Schnitt durch die auch in Fig. 5B dargestellte Nabenleiste, wodurch die konstruktiv eingearbeiteten/berücksichtigten Hohlräume erkennbar werden. In **Fig. 5B** sind sowohl ein konkretes Ausführungsbeispiel der Nabenleiste 17 als auch der entsprechende Verschnittanteil 17a dargestellt. Insbesondere im Vergleich zum in Fig. 1B gezeigten Verschnittanteil (Stand der Technik) ist dieser Verschnittanteil vergleichsweise gering/klein.

Die hier beschriebene Segmentbauweise ermöglicht dabei auch eine deutlich weitreichendere Digitalisierung und damit auch eine Vereinheitlichung des/der Produktionsprozesse für schweißtechnische Produkte im Allgemeinen (hier wie beschrieben insbesondere unter Bezugnahme auf vergleichsweise komplexe Getriebegehäuse), wobei die Produktion/Fertigung wahlweise auch unter Bezugnahme auf einen/den digitalen Zwilling der Konstruktion erfolgen kann.

Im Folgenden kann die erfindungsgemäße Herangehensweise zur Konstruktionserstellung (Schritt S100) auch durch Bezugnahme auf einen beispielhaften Ablauf einzelner Schritte speziell bei einer spezifischen Schweißgehäusekonstruktion erfolgen, wobei wahlweise die Reihenfolge und/oder die Zusammenfassung einzelner der Schritte im jeweiligen Einzelfall je nach Implementierung des hier beschriebenen teilvariablen digitalen Baukastens variieren kann: Schritt S1 Input Zieldaten der soll-Geometrie; Schritt S2 Sortierung nach Konfigurationsklassen; Schritt S3 Auslegung Radsatz (oder beispielhaft andere Komponente der Konstruktion) entsprechend der Geometriedaten als begrenzende Größe; Schritt S4 Abfrage Bestandsdaten (Suche nach Wiederholungen), wobei Bestandsdaten insbesondere auch Daten bereits verbauter oder im Einsatz befindlicher Anlagen, insbesondere Getriebe, betreffen; Schritt S5 Abgleich Leistungsdaten (Optimierung), wobei Leistungsdaten insbesondere auch die Betriebsparameter z.B. eines Getriebes oder einer sonstigen Anlage betreffen, für welche(s) die Konstruktion generiert wird; (insbesondere an dieser Stelle kann auch Schritt S10 bzw. S10a erfolgen, nämlich eine Erfassung/Berücksichtigung von Messdaten eines Bestands-/Referenzgetriebes, und/oder ein Abgleich mit tatsächlichen Leistungsdaten, insbesondere Anpassung eines Servicefaktors); Schritt S6 Erstellung der Gehäusegeometrie, insbesondere durch Zuordnung von Referenzteilen (fixen Teilen) und variablen Teilen; Schritt S7 Erstellung eines/des teilvariablen Baukastens, beispielsweise auf Grundlage der Häufigkeitsverteilung tatsächlich benötigter Teile (insbesondere zwecks unternehmens-/branchenspezifischer individueller Anpassung an Marktbedürfnisse); Schritt S8 Erstellen eines digitalen Zwillings (insbesondere in Hinblick auf digital unterstützte Service- und Ersatzteilmaßnahmen); Schritt S9 Erstellen der Fertigungsunterlagen, insbesondere an einer (kommunikativen) Schnittstelle zu einer/der entsprechenden Fertigungslinie/-einheit;

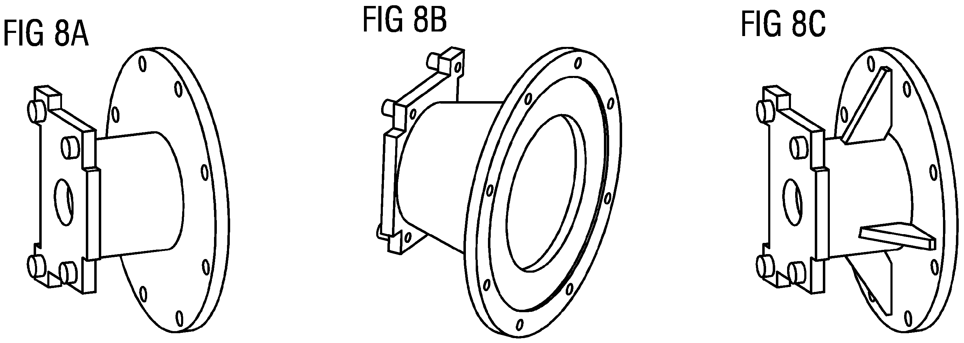

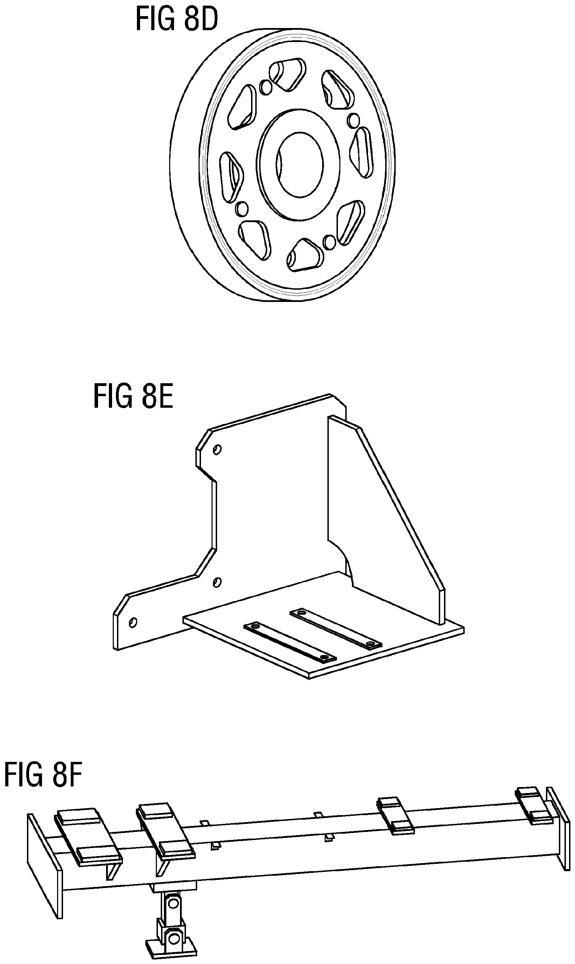

In den Figuren **8A, 8B, 8C****,** **8D, 8E, 8F** sind exemplarisch weitere Schweißkonstruktionen gezeigt, für welche die vorliegende Erfindung implementierbar ist, nämlich: Standardzylinder mit beidseitigem Flansch und optional auch Rippenabstützung (Fig. 8A, Fig. 8C), Konus mit beidseitigem Flansch (Fig. 8B), geschweißtes Zahnrad (Fig. 8D), Bremskonsole (Fig. 8E), Schwinge (Fig. 8F).

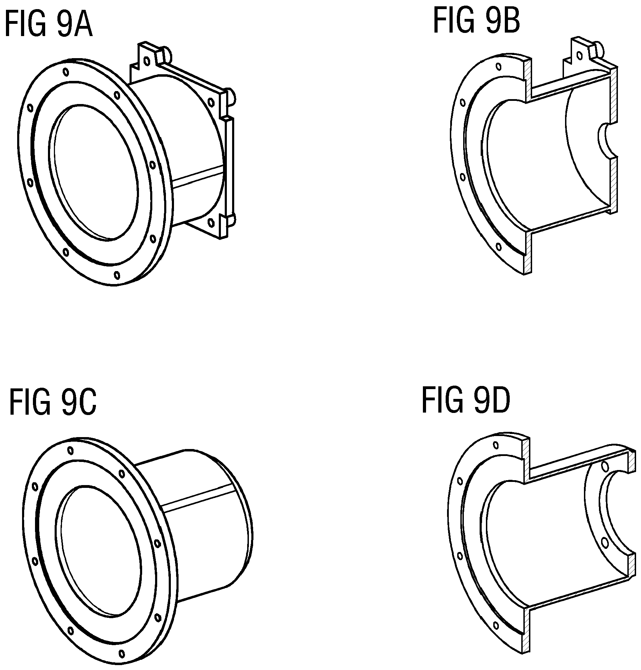

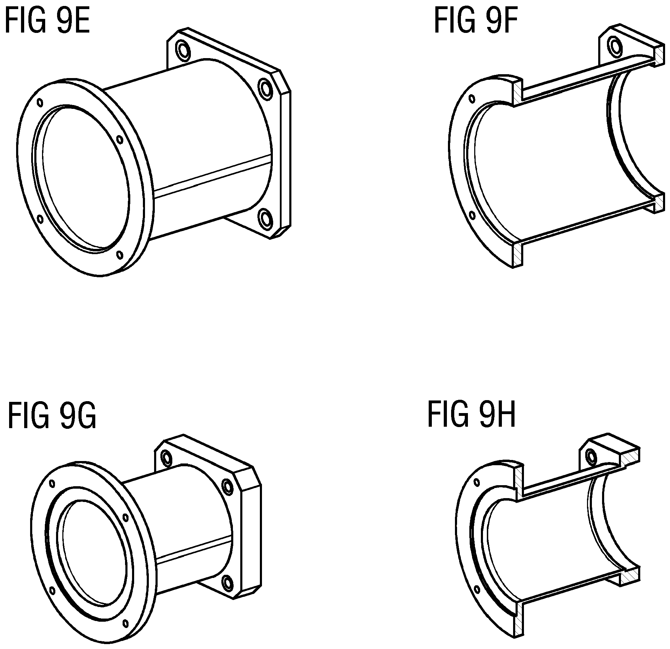

In den Figuren **9A, 9B,** und **9C****, 9D** und **9E, 9F** und **9G, 9H** sind paarweise vier Beispiele von Optimierungsansätzen basierend auf der vorliegenden Erfindung veranschaulicht, jeweils unter Bezugnahme auf eine spezifische von mehreren im jeweiligen Anwendungsfall denkbaren konstruktiven Ansätzen für einen Standardzylinder mit beidseitigem Flansch: die Figuren **9A, 9B** zeigen einen ersten Optimierungsansatz, wobei das Bauteil beispielsweise hinsichtlich Materialeinsatz und Gewicht optimiert ist/wird; die Figuren **9C, 9D** zeigen einen zweiten Optimierungsansatz, wobei das Bauteil beispielsweise hinsichtlich der Ausgestaltung oder Integration wenigstens eines der Flansche optimiert ist/wird; die Figuren **9E, 9F** zeigen einen dritten Optimierungsansatz, wobei das Bauteil beispielsweise hinsichtlich der Ausgestaltung des Anschlussdurchmessers oder wenigstens eines dafür vorgesehenen Flansches optimiert ist/wird (insbesondere stirnseitige Anbindung des Flansches); die Figuren **9G, 9H** zeigen einen vierten Optimierungsansatz, wobei das Bauteil beispielsweise hinsichtlich der Anbindung wenigstens eines der Flansche an den Zylinder optimiert ist/wird (hier insbesondere auch Variation hinsichtlich innenliegender Zentrierung des Zylinders im Flansch). Wahlweise kann bei diese individuellen Optimierungen oder mehrfachen Iterationen auch wenigstens ein bestimmtes verfügbares Fertigungs-/Schweißverfahren Berücksichtigung finden, wie bereits zuvor weiter oben erläutert.

### Bezugszeichenliste

- 1: Schweißgehäuse(konstruktion), insbesondere für Getriebe
- 1.1: Seitenwand
- 1.3: Seitenwandbaugruppe
- 3: Hebeöse (insbesondere vordefiniertes Teil/Segment)
- 3a, 3b: erste Hebeöse, zweite Hebeöse
- 5: Anschluss Schaulochdurchmesser (insbesondere variable(s) Teil(e))
- 7: Nabenleiste gemäß herkömmlicher Bauweise
- 7a: Verschnitt gemäß herkömmlicher Bauweise
- 8: Wandbauteil/-baugruppe (insbesondere variable Teile/Segmente)
- 9: Fuß-/Bodenleiste bzw. Bodenbaugruppe (insbesondere variable Teile/Segmente)
- 10: teilvariabler Baukasten
- 11: fix vordefiniertes Teil (nicht variabel)
- 12: variables/variationsfähiges Teil
- 13: Segment
- 14: Modul
- 17: Nabenleiste (insbesondere mit/aus variablen Teilen)
- 17a: Verschnitt
- 20: Server mit Logik-/Recheneinheit (insbesondere CPU)
- 21: Datenspeicher, Datenbank
- 30: Computerprogrammprodukt
- 31: grafische Benutzerschnittstelle
- 40: Fertigungslinie bzw. Fertigungsprozess(e)
- 41: erste Fertigungsanlage/-maschine
- 42: zweite Fertigungsanlage/-maschine
- 43: dritte Fertigungsanlage/-maschine
- 44: vierte Fertigungsanlage/-maschine
- 100: Schweißgehäuse(konstruktion), insbesondere Getriebegehäuse(konstruktion)
- P: Eingangsparameter
- S1: Input von Sollgeometriedaten
- S2: (Getriebe-)Konfigurationsklassifikation;
- S3: Auslegung von Getriebeübersetzung und/oder Radsatz
- S4: Abfrage von Bestandsdaten;
- S5: Abgleich mit Leistungsdaten;
- S6: Erstellung der Schweißgehäusegeometrie basierend auf einer Zuordnung/Zuweisung von Referenzteilen und variablen Teilen
- S7: Erstellung oder Erweiterung oder Aktualisierung eines/des teilvariablen digital integrierbaren Baukastens insbesondere basierend auf einer/der Häufigkeitsverteilung tatsächlich benötigter Teile
- S8: Erstellung eines digitalen Zwillings der Schweißgehäusekonstruktion
- S9: Erstellung/Bereitstellung von Fertigungsunterlagen
- S10: Erfassung/Berücksichtigung von Messdaten wenigstens eines Bestands-/Referenzgetriebes, insbesondere umfassend Schritt S10a
- S10a: Analyse/Abgleich mit tatsächlichen Leistungsdaten, insbesondere Anpassung eines Servicefaktors
- S100: automatisierte Überführung in computergestützt generierte Schweißgehäusekonstruktion
- S200: produktionstechnische Herstellung einzelner (Standard-)Teile/Segmente
- S300: schweißtechnische Produktion von variablen Modulen
- S400: Verbinden/Zusammenbauen von wenigstens zwei Modulen
- S500: produktionstechnische Fertigstellung des Schweißgehäuses

## Patentansprüche

1. Verfahren zum Bereitstellen einer zumindest teilweise computergestützt generierten Schweißkonstruktion (100), insbesondere Schweißgehäusekonstruktion für Industriegetriebe, wobei wenigstens ein individueller/individualisierbarer konstruktionsspezifischer Eingangsparameter (P) wenigstens eines Teils der Schweißkonstruktion (100) aus der folgenden Gruppe manuell und/oder computergestützt definiert wird: Baugrößenparameter, Anschlussmaßparameter, Bauformparameter;
**dadurch gekennzeichnet, dass** zur zumindest teilweise computergestützten Definition der Schweißkonstruktion (100) auf eine Datenbank (21) mit darin hinterlegtem teilvariablem Baukasten (10) zurückgegriffen wird, in welchem wenigstens zwei standardisierte Teile (11) hinterlegt sind, von denen wenigstens ein standardisiertes Teil (11) computergestützt ausgewählt wird zum Bilden der Schweißkonstruktion (100), wobei die Schweißkonstruktion (100) unter Verwendung des wenigstens einen ausgewählten standardisierten Teiles (11) und unter Berücksichtigung des wenigstens einen individuellen konstruktionsspezifischen Eingangsparameters (P) computergestützt generiert wird.

2. Verfahren nach Anspruch 1, wobei die Schweißkonstruktion (100) sowohl basierend auf dem wenigstens einen ausgewählten standardisierten Teil (11) als auch basierend auf wenigstens einem von mehreren im teilvariablen Baukasten (10) hinterlegten variablen Teilen (12) computergestützt generiert wird, insbesondere unter Berücksichtigung wenigstens eines individuellen Anschlussmaßparameters und/oder wenigstens eines individuellen Baugrößenparameters.

3. Verfahren nach mindestens einem der vorgenannten Ansprüche, wobei die Schweißkonstruktion (100) in vordefinierte/vordefinierbare Segmente (13) und in Module unterteilt (14) ist/wird oder wobei die im teilvariablen Baukasten hinterlegten standardisierten und/oder variablen Teile (11, 12) in vordefinierte/vordefinierbare Segmente und Module unterteilt sind/werden, wobei für die Schweißkonstruktion (100) wenigstens ein Segment und wenigstens ein Modul ausgewählt werden, wobei zur computergestützten Definition/Generierung der Schweißkonstruktion auf die Datenbank mit teilvariablem Baukasten zurückgegriffen wird, in welchem die Segmente und Module hinterlegt sind/werden und aus welchem für die Schweißkonstruktion geeignete Segmente und Module computergestützt ausgewählt werden, wobei die Schweißkonstruktion aus diesem Baukasten bei zumindest teilweiser Standardisierung durch Einbezug wenigstens eines der vordefinierten standardisierten/standardisierbaren Segmente unter Berücksichtigung des wenigstens einen individuellen konstruktionsspezifischen Eingangsparameters (P) generiert wird.

4. Verfahren nach mindestens einem der vorgenannten Ansprüche, wobei der teilvariable Baukasten (10) ein digital integrierbarer Baukasten ist, bei welchem die einzelnen Teile (11, 12) und wf8ahlweise auch daraus gebildete Segmente (13) und/oder Module (14) laufzeitgeneriert/laufzeitgenerierbar sind.

5. Verfahren nach mindestens einem der vorgenannten Ansprüche, wobei der teilvariable Baukasten (10) ein digital integrierbarer Baukasten ist, bei welchem durch wenigstens einen der folgenden manuellen oder computergestützten Schritte eine/die Datenpflege oder Datennutzung erfolgt: Input von Sollgeometriedaten; Konfigurationsklassifikation; Abfrage von Bestandsdaten und/oder Abgleich mit Leistungsdaten; Zuordnung/Zuweisung von standardisierten Referenzteilen (11) und variablen Teilen (12), insbesondere in einzelne Segmente (13) und Module (14); Erstellung oder Erweiterung oder Aktualisierung des teilvariablen Baukastens (10) insbesondere basierend auf einer/der Häufigkeitsverteilung benötigter Teile; Erstellung eines digitalen Zwillings der Schweißkonstruktion (100); Erfassung/Berücksichtigung von Messdaten wenigstens eines Bestands-/Referenzbauteils oder wenigstens einer Bestands-/Referenzkonstruktion; Anpassung eines Servicefaktors in Abhängigkeit von Leistungsdaten.

6. Verfahren nach mindestens einem der vorgenannten Ansprüche, wobei einzelne Segmente (13) der Schweißkonstruktion zumindest teilweise bauformunabhängig und zumindest teilweise baugrößenunabhängig zum Bilden von standardisierbaren/standardisierten Teilen (11) oder Teilegruppen der Schweißkonstruktion bereitgestellt sind; und/oder wobei die Segmente (13) zumindest teilweise vordefiniert/vordefinierbar verwendbare Segmente sind und wahlweise auch variabel/alternativ verwendbare Segmente umfassen; und/oder wobei wenigstens eines der variablen Segmente (13) aus einem Katalog von mehreren Typen dieses Segments auf automatisierte computergestützte Weise ausgewählt wird, insbesondere basierend auf dem wenigstens einen individuellen konstruktionsspezifischen Eingangsparameter (P); und/oder wobei Module (14) der Schweißkonstruktion vordefiniert verwendbare Module und/oder variabel auswählbare Module sind.

7. Verfahren nach mindestens einem der vorgenannten Ansprüche, wobei die Schweißkonstruktion (100) wenigstens ein variables laufzeitgeneriertes Teil (12) aus dem Baukasten (10) umfasst, welches bezüglich zumindest eines der folgenden Optimierungsparameter variabel ist: Länge, Breite, Materialdicke; und/oder wobei wenigstens eines der variablen Teile (12) oder Segmente (13) oder Module (14) der Schweißkonstruktion (100) aus dem teilvariablen Baukasten (10) laufzeitgeneriert wird; und/oder wobei das Verfahren eine Parametervariation wenigstens eines Optimierungsparameters wenigstens eines variablen laufzeitgenerierten Teils (12) der Schweißkonstruktion umfasst, insbesondere im Rahmen einer optional durch einen Nutzer parameterspezifisch zuwählbaren Optimierungsiteration betreffend die Schweißkonstruktion (100), insbesondere zur Materialeinsatzminimierung.

8. Verfahren nach mindestens einem der vorgenannten Ansprüche, wobei wenigstens ein Modul der Schweißkonstruktion (100) auf automatisierte computergestützte Weise erstellt und/oder zugeordnet wird; und/oder wobei wenigstens eines der Module (14) eine Unterbaugruppe von Teilen für eine Nabenleiste der Schweißkonstruktion (100) bildet/darstellt; und/oder wobei die Module (14) jeweils eine Unterbaugruppe bilden, insbesondere eine laufzeitgeneriert erstellbare/zuordenbare Unterbaugruppe; und/oder wobei einzelne Segmente (13) und Module (14) der Schweißkonstruktion (100) in vordefinierter Wechselbeziehung/Korrelation zueinander im Baukasten (10) hinterlegt sind/werden, insbesondere derart, dass die Verwendung eines bestimmten Segments (13) die Verwendung/Empfehlung wenigstens eines bestimmten Moduls (14) bedingt, und/oder umgekehrt.

9. Verfahren nach mindestens einem der vorgenannten Ansprüche, wobei der wenigstens eine individualisierbare konstruktionsspezifische Eingangsparameter (P) wenigstens eines Teils (11, 12) der Schweißkonstruktion (100) manuell über eine grafische Benutzerschnittstelle (31) eingegeben wird oder während der computergestützten Erstellung der Schweißkonstruktion (100) zur manuellen Eingabe oder Variation systemseitig abgefragt wird.

10. Verfahren nach mindestens einem der vorgenannten Ansprüche, wobei ein digitaler Zwilling der Schweißkonstruktion (100) erstellt wird und in der Datenbank (21) abgelegt wird.

11. Verfahren zum Fertigen eines Schweißgehäuses (1), wobei wenigstens eine Fertigungsanlage/-maschine (41) mit Konstruktionsdaten gespeist wird, welche mittels eines Verfahrens nach mindestens einem der vorgenannten Ansprüche generiert und bereitgestellt sind/werden, wobei die Fertigungsanlage/-maschine (41) bevorzugt an eine/die Datenbank (21) gekoppelt ist, in welcher ein/der für das Generieren der entsprechenden Schweißkonstruktion (100) genutzte teilvariable Baukasten (10) hinterlegt ist.

12. Schweißkonstruktion (100), insbesondere Schweißgehäusekonstruktion, hergestellt durch Anwendung eines Verfahrens nach mindestens einem der Verfahrensansprüche 1 bis 10, wobei die Schweißkonstruktion (100) bevorzugt ein modularisiertes oder modulartig aufgebautes Schweißgehäuse (1) in Segmentbauweise betrifft/abbildet, bevorzugt umfassend zumindest ein aus mehreren Teilen (11, 12) gebildetes Segment (13) und zumindest ein daraus generiertes Modul (14).

13. Schweißgehäuse (1), hergestellt durch Verbauen von einerseits standardisierten und andererseits variablen (Bau-)Teilen (11, 12), welche durch Anwendung eines Verfahrens nach mindestens einem der Verfahrensansprüche 1 bis 10 computergestützt ausgewählt und computergestützt zusammen zu einer/der entsprechenden Schweißkonstruktion (100) konstruiert sind/werden, wobei das Schweißgehäuse (1) bevorzugt ein modularisiertes Schweißgehäuse in Segmentbauweise ist, bevorzugt umfassend zumindest ein aus mehreren der Teile (11, 12) gebildetes Segment (13) und zumindest ein daraus generiertes Modul (14).

14. Computerprogrammprodukt umfassend Befehle, die bei Ausführung des Computerprogrammproduktes auf einem Computer diesen dazu veranlassen, ein Verfahren nach mindestens einem der Verfahrensansprüche 1 bis 10 auf dem Computer auszuführen, insbesondere Computerprogrammprodukt eingerichtet zum Überführen von computergestützt aus einem/dem teilvariablen Baukasten (10) ausgewählten/auszuwählenden vordefinierten und variablen (Bau-)Teilen (11, 12) in eine zumindest teilweise standardisierte Schweißkonstruktion (100) basierend auf wenigstens einer nutzer-/anwendungsspezifische Anforderung oder eines entsprechenden Eingangsparameters (P) insbesondere hinsichtlich Außenabmessungen und Anschlussmaßen der zu erstellenden Konstruktion.

15. Verwendung eines in einer Datenbank (21) hinterlegten teilvariablen Baukastens (10), in welchem standardisierte und variable Teile (11, 12) hinterlegt sind, zum Bereitstellen einer zumindest teilweise computergestützt generierten Schweißkonstruktion (100), insbesondere Schweißgehäusekonstruktion für Industriegetriebe, zum computergestützten Auswählen wenigstens eines der standardisierten Teile (11) und/oder wenigstens eines der variablen Teile (12) unter Berücksichtigung wenigstens eines individuellen/individualisierbaren konstruktionsspezifischen Eingangsparameters (P) und zum computergestützten Erstellen der Schweißkonstruktion (100), insbesondere indem vordefinierte und variable (Bau-)Teile (11, 12) aus dem teilvariablen Baukasten (10) basierend auf wenigstens einer nutzer-/anwendungsspezifische Anforderung oder eines entsprechenden Eingangsparameters (P) insbesondere hinsichtlich Außenabmessungen und Anschlussmaßen der zu erstellenden Konstruktion computergestützt ausgewählt und in eine zumindest teilweise standardisierte Schweißkonstruktion (100) computergestützt übergeführt werden, insbesondere bei einem Verfahren nach mindestens einem der Verfahrensansprüche 1 bis 10.
